Europäisches Patentamt

European Patent Office

Office européen des brevets

(11) Veröffentlichungsnummer: **0 046 545**

**A1**

(12) ## EUROPÄISCHE PATENTANMELDUNG

(21) Anmeldenummer: **81106314.8**

(22) Anmeldetag: **13.08.81**

(51) Int. Cl.³: **H 01 H 83/10**
**H 01 T 1/14, H 02 H 9/06**

(30) Priorität: **21.08.80 AT 4260/80**

(43) Veröffentlichungstag der Anmeldung:
**03.03.82 Patentblatt 82/9**

(84) Benannte Vertragsstaaten:
**BE CH DE FR GB IT LI LU NL SE**

(71) Anmelder: **BROWN, BOVERI & CIE Aktiengesellschaft**
**Kallstadter Strasse 1**
**D-6800 Mannheim 31(DE)**

(72) Erfinder: **Biegelmeier, Gottfried, Prof. Ing. Dr. Phil.**
**Schieszstattg. 19**
**A-3400 Kosterneuburg(AT)**

(74) Vertreter: **Kempe, Wolfgang, Dr. et al,**
**c/o BROWN, BOVERI & CIE AG Kallstadter Strasse 1**
**D-6800 Mannheim 31(DE)**

(54) **Elektrische Installationseinrichtung.**

(57) Eine elektrische Installationseinrichtung zur Sicherung gegen hohe Überspannungen besitzt einen eine Funktionsstrecke (1) aufweisenden Überspannungsableiter, einen spannungsabhängigen Widerstand (2) und eine schaltbare Trennvorrichtung mit Betätigungsorgan oder optischem Schaltstellungsanzeiger (6), Schaltschloß, Kontaktapparat mit Lichtobenlöschkammer (4) und Überstromauslösern (7, 8). Zur Vereinfachung des Aufbaus ist der Überspannungsableiter mit der Funkenstrecke (1) zusammen mit den die schaltbare Trennvorrichtung bildenden Bauteilen in einem gemeinsamen Gehäuse (3) aus Isolierstoff angeordnet, in dem auch die Anschlußklemmen (12, 13) für den aktiven Leiter bzw. für die Erdung angebracht sind.

Die Überstromauslöser (7, 8) können in an sich bekannter Weise einen Bimetallauslöser (7) und einen elektromagnetischen Auslöser (8) aufweisen.

Fig.3

EP 0 046 545 A1

BROWN,BOVERI & CIE      Aktiengesellschaft

Mannheim                17. Juli 1981

ZPT/P4-Ft/Ht            Mp.-Nr. 600/81

## "Elektrische Installationseinrichtung"

Die Erfindung betrifft eine elektrische Installationseinrichtung zur Sicherung gegen hohe Überspannungen mit einem
eine Funkenstrecke und einen spannungsabhängigen Widerstand
oder nur einen spannungsabhängigen Widerstand aufweisenden
Überspannungsableiter und einer schaltbaren Trennvorrichtung
mit Betätigungsorgan oder optischem Schaltstellungsanzeiger,
Schaltschloß, Kontaktapparat mit Lichtbogenlöschkammer und
Überstromauslösern.

Infolge des stetigen Ansteigens der indirekten Blitzschäden
in Verbraucheranlagen gewinnen Schutzmaßnahmen gegen Überspannungen zunehmend an Bedeutung. Dafür werden vor allem
Ventilableiter verwendet, die aus einer Serienschaltung einer
Funkenstrecke und einem spannungsabhängigen Widerstand
bestehen. Die Erfahrung hat gezeigt, daß der Schutz der
Freileitungen mit Überspannungsableiter nicht genügt, um die
elektrischen Betriebsmittel in den elektrischen Anlagen
zuverlässig gegen Blitzstromwandlerwellen aus dem Freileitungsnetz zu schützen. Wahrscheinlich ist dies dadurch bedingt, daß die Überspannungsableiter in den Freileitungen oft nicht genügend gut geerdet sind oder in zu geringem Umfange eingesetzt werden. Dazu kommt noch, daß Überspannungsableiter bei direkten Blitzeinschlägen in die Leitung zerstört werden können; da regelmäßige periodische Überprüfungen selten stattfinden, sind sie über längere Zeiträume hinweg nicht funktionsfähig und die Anlage ist nicht mehr geschützt. Für einen zuverlässigen Überspannungsschutz der Verbraucheranlagen ist es daher notwendig, zusätzlich Innenraumableiter vorzusehen.

Auch bei Innenraumableitern muß die Kontrolle der Funktionsbereitschaft erleichtert sein. Deshalb sollen sie nicht im versperrten Hausanschlußkasten, sondern in der Zählerverteilung installiert werden. Außerdem entfällt dann auch die kostspielige Verlegung einer eigenen Erdungsleitung im getrennten Rohr vom Hausanschlußkasten zur Potentialausgleichsschiene. Wird der Ableiter überbeansprucht, so kann in der Funkenstrecke und im spannungsabhängigen Widerstand ein Kurzschluß entstehen. Deshalb war es früher üblich, in Serie mit den Übespannungsableitern geeignete Schmelzsicherungen oder Schutzschalter vorzusehen. Diese Lösung hat den Nachteil, daß man das Ansprechen der Schutzorgane nicht beachtete, weil die Anlage weiter funktionierte und der schadhafte Ableiter eingebaut blieb. Deshalb besitzen die derzeit auf dem Markt befindlichen Überspannungsableiter eine Trennvorrichtung, die meist aus einem Schmelzstreifen besteht, der beim Ansprechen das Herausspringen oder Abfallen eines Kennmelders bewirkt. Das Schaltvermögen dieser Trennvorrichtung wurde bisher kaum beachtet. Dies ist auch für den Überspannungsableiter für Freileitungen nicht kritisch, denn im Freileitungsnetz kann selbst ein explodierender Ableiter kaum Schaden anrichten. Ganz anders verhält es sich aber bei Innenraumableitern. Explodiert ein derartiger Ableiter in der Verteilung oder gar im Hausanschlußkasten, dann resultiert daraus unmittelbar eine Lebens- und Brandgefahr für die geschützte Anlage.

Aufgabe der Erfindung ist es, diesen Mißstand zu beseitigen.

Diese Aufgabe wird erfindungsgemäß dadurch gelöst, daß der Überspannungsableiter                    zusammen mit den die schaltbare Trennvorrichtung bildenden Bauteilen in einem gemeinsamen Gehäuse aus Isolierstoff angeordnet ist, in dem auch die Anschlußklemmen für den  aktiven Leiter bzw. für die Erdung angebracht sind.

Die Überstromauslöser können erfindungsgemäß aus einem Bimetallauslöser und einem elekromagnetischen Auslöser bestehen, wobei der bewegliche Kontakthebel der Trennvorrichtung mit dem Anker des elektromagnetischen Auslösers über ein verzögernd kuppelndes Zuggestänge verbunden ist, das im Auslösefall erst dann wirksam wird, nach dem der Anker den für das Lösen der Verklinkung erforderlichen Weg zurückgelegt hat.

Die rotationssymmetrisch aufgebaute Funkenstrecke und der spannungsabhängige Widerstand können erfindungsgemäß so neben der Trennvorrichtung angeordnet sein, daß ihre Symmetrieachse senkrecht auf der Ebene steht, die durch die Bewegung des beweglichen Kontakthebels der Trennvorrichtung bestimmt ist. Des weiteren können erfindungsgemäß in dem Gehäuse aus Isolierstoff akustische und optische Signalgeber angeordnet sein, die die Beschädigung des Ableiters anzeigen. Für eine optische oder akustische Fernanzeige des Beschädigung des Ableiters oder des Ausschaltzustandes der Trennvorrichtung kann auch eine zusätzliche Klemme für den Anschluß einer Signalleitung und ein Kontakt vorgesehen sein, der sich beim Öffnen des Kontaktes der Trennvorrichtung schließt.

Es wird also die Technik des Überspannungsableiters mit der Technik des modernen Leitungsschutzes verbunden. Die bisher für die Trennvorrichtung im Überspannungsableiter verwendeten Schmelzstreifen haben nicht nur ein völlig unzureichendes Schaltvermögen, sondern auch eine zu geringe Wärmekapazität. Sie können daher durch einen Stromstoß zerstört werden, den der Ableiter noch einwandfrei löschen könnte, wenn man sie so dimensioniert, daß vom Standpunkt des Berührungsspannungsschutzes hohe Erdungswiderstände zulässig wären. Dies bedeutet ja, daß die Trennvorrichtung schon bei kleinen Stömen von wenigen Ampere in Sekunden ansprechen muß, wenn in der Anlage eine Fehlerstromschutzschaltung oder eine Schutzerdung angewendet wird. Viel günstiger sind in dieser Beziehung die Bimetallauslöser mit in Serie dazu liegenden elektromagneti-

schen Schnellauslösern. Die Abschaltstromstärken im Fehlerfall können daher, wenn die Ableiter in einer Anlage mit Schutzmaßnahme "Nullung" eingebaut sind, bis zum eingeprägten Kurzschlußstrom der Anlage gehen; dieses sind einige Kilo Amere. Für Schutzschalter, die vor dem Zähler eingebaut werden, empfehlen die Elektrizitätsversorgungsunternehmen ein Schaltvermögen von beispielsweise 10 Kilo Amere.

Als Trennvorrichtung des Überspannungsableiters ist also die vom Leitungsschutz her bekannte Technik des Schlagankers verwendet worden (vgl. AT-PS 237 724). In dem gemeinsamen Gehäuse aus Isolierstoff werden in Serienschaltung die Funkenstrecken des Ableiters, sein spannungsabhängiger Widerstand und die Trennvorrichtung untergebracht. Letztere ist schaltbar ausgeführt, wobei sie ein Betätigungsorgan in Form eines Schaltknebels aufweist oder ein optischer Schaltstellungsanzeiger den Schaltzustand der Trennvorrichtung deutlich von außen erkennbar anzeigt. Auch die Ein- und Ausschaltstellungen des Betätigungsorganes sind deutlich gekennzeichnet und von weitem erkennbar. Der Unterschied zwischen Betätigungsorgan und Schaltstellungsanzeiger besteht dabei nur darin, daß bei Vorhandensein eines Betätigungsorganes der Anlageninhaber versuchen kann, den Überspannungsableiter wieder einzuschalten, während bei der Aus-Anzeige des Schaltstellungsanzeigers der Überspannungsanzeiger ersetzt werden muß. Zweckmäßigerweise wirkt dann das Betätigungsorgan über ein Schaltschloß mit Freiauslösung auf den Kontaktapparat, während bei einer Ausführung mit Schaltstellungsanzeiger das Schaltschloß ohne Freiauslösung ausgeführt werden kann. Die Freiauslösung ist deshalb notwendig, um zu verhindern, daß der Anlageninhaber den Überspannungsableiter wieder einzuschalten versucht. Die Trennvorrichtung kann mit einer geeigneten Lichbogenlöschkammer versehen sein, die zusammen mit dem Anker des elektromagnetischen Auslösers das erforderliche Schaltvermögen gewährleistet. Der Bimetallauslöser und der elektromagnetische Auslöser sind so dimensioniert, daß sie einen möglichst kleinen Dauerstrom, aber einen möglichst hohen Stoßstrom der atmosphärischen Entladung, ohne Schaden zu nehmen, führen können.

Dadurch, daß der Anker über en verzögert kuppelndes Zuggestänge mit dem beweglichen Kontakthebel verbunden ist, entklinkt der Anker zuerst durch einen Schlag auf eine Klinke die Kniegelenkkette des Schaltschlosses und zieht dann zusätzlich an dem beweglichen Kontakthebel, wordurch der Ausschaltverzug des Kontaktes verkleinert wird.

Die schaltbare Trennvorichtung erfüllt zwei Aufgaben: Bei Überbeanspruchung und Zerstörung der Funkenstrecke und des spannungsabhängigen Widerstandes mit Kurzschlußbildung schaltet sie den Netzkurzschlußstrom ab. Versucht der Anlageninhaber bei der Ausführung mit Betätigungsorgan in diesem Falle wieder einzuschalten, dann schaltet er auf den bestehenden Kurzschluß, der durch die Freiauslösung des Schaltschlosses wieder abgeschaltet wird.

Im zweiten, selteneren Fall wird die Trennvorrichtung nur durch den atmosphärischen Stoßstrom ausgelöst, ohne daß der Ableiter zerstört wird. In diesem Falle kann der Anlageninhaber einschalten und der Ableiter ist wieder funktionsbereit.

Ob ein Kurzschluß besteht oder nicht, kann auf einfache Weise erfindungsgemäß durch den Einbau des optischen oder akustischen Signalgebers erreicht werden, der parallel zur Kontaktstelle der Trennvorrichtung in das gemeinsame Gehäuse eingebaut wird.

Eine Fernanzeige des Ansprechens der Trennvorrichtung oder der Zerstörung des Ableiters kann auch dadurch erreicht werden, daß im gemeinsamen Gehäuse ein Kontakt vorgesehen wird, der sich beim Öffnen der Kontaktstelle der Trennvorrichtung schließt. Ein Kontaktstück dieses Schließkontaktes oder Hilfskontaktes ist mit einer Klemme für den Anschluß einer Signalleitung, das andere entweder mit der Klemme für den aktiven Leiter verbunden oder der Kontaktstelle der Trennvorrichtung direkt parallelgeschaltet.

Natürlich kann die Funkenstrecke und der ihr zugeordnete spannungsabhängige Widerstand durch lediglich einen geeignet ausgebildeten spannungsabhängigen Widerstand z. B. aus ZnO ersetzt werden.

Anhand der Zeichnung, in der ein Ausführungsbeispiel der Erfindung dargestellt ist, sollen die Erfindung sowie weitere
vorteilhafte Ausgestaltungen und Verbesserungen der Erfindung
näher erläutert und beschrieben werden.

Es zeigt:

Fig. 1    eine Schaltungsanordnung mit Einbau einer
          erfindungsgemäßen Einrichtung bei geerdetem Netz,

Fig. 2    eine der Schaltungsanordnung 1 entsprechende
          Schaltungsanordnung für genulltes Netz,

Fig. 3    die Schaltung der erfindungsgemäßen Einrichtung,

Fig. 4    eine mögliche Anordnung der Einrichtung gem. Fig.
          3,

Fig. 5    eine Schnittansicht gem. Linie A-B der Fig. 4,

Fig. 6    eine Schnittansicht gem. der Linie C-D der Fig. 4,

Fig. 7-10 jeweils weitere Ausführungsbeispiele der Erfindung.

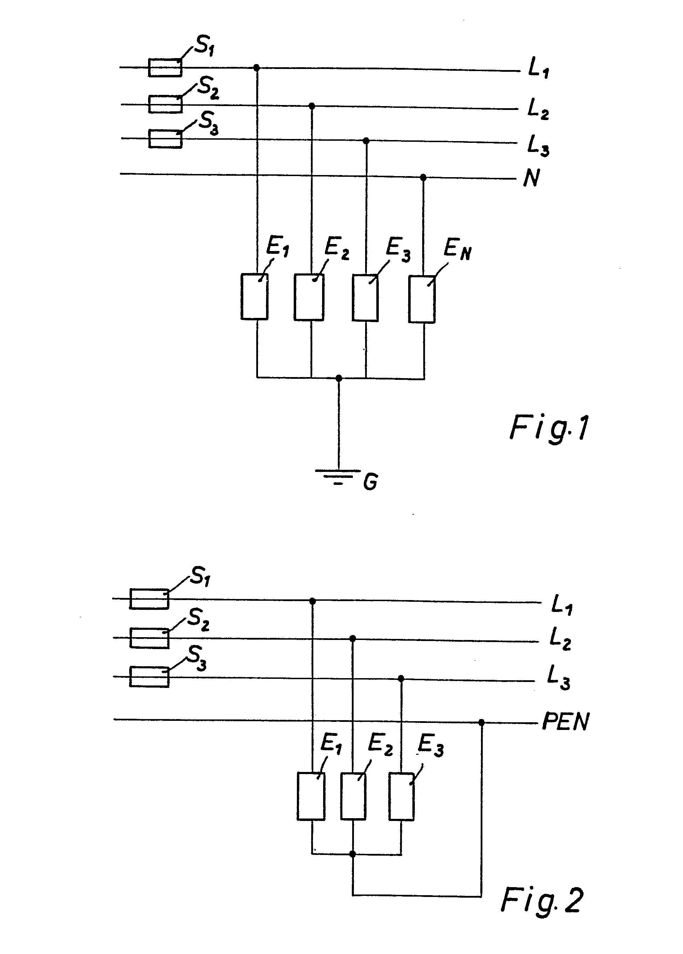

In der Figur 1 ist ein Leitungsnetz mit sogenannten aktiven Leitern L1, L2, L3 und N (der letztere ist der Mittelpunktsleiter oder der neutrale Leiter) dargestellt, von denen die Leiter L1 bis L3 durch Schmelzsicherungen S1, S2 und S3 abgesichert sind. Jeweils zwischen den einzelnen Leitern L1, L2, L3 und N und Erde G sind erfindungsgemäße Einrichtungen E1, E2, E3 und EN geschaltet, derart, daß der Eingang der Einrichtungen E1 bis EN mit den zugehörigen Leitern L1 bis N verbunden und die Ausgänge der Einrichtungen E1 bis EN gemeinsam an die Erde G geschaltet sind.

In der Figur 2 ist ein Leitungsnetz mit aktiven Leitern L1, L2 und L3 und einem Nulleiter PEN dargestellt, von denen die aktiven Leiter wiederum mit Schmelzsicherungen S1, S2 und S3 abgesichert sind. Der Eingang der erfindungsgemäßen Einrichtungen E1, E2 und E3 ist mit den aktiven Leitern L1 bis L3 verbunden und der Ausgang der Einrichtungen E1 bis E3 gemeinsam auf den Nulleiter PEN geschaltet.

Bei beiden Schaltungsanordnungen werden Überspannungen gegen Erde bzw. gegen den Nulleiter durch den Überspannungsableiter abgeleitet und durch die Trennvorrichtung in den Einrichtungen E1 bis EN ein Stromfluß bei einer die Funkenstrecke des Übespannungsableiters zerstörenden Überspannung infolge Auslösung unterbrochen.

Der Aufbau und die Wirkungsweise der Einrichtungen E1 bis EN werden im folgenden näher erläutert und beschrieben.

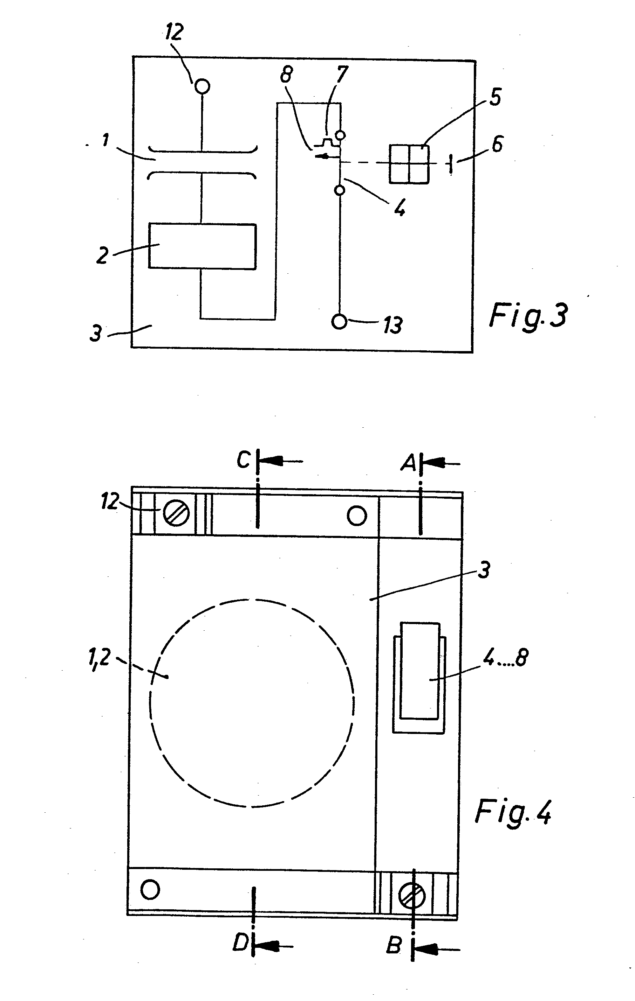

Figur 3 zeigt beispielhaft die Schaltung einer erfindungsgemäßen Einrichtung mit Überspannungsableiter und schaltbarer Trennvorrichtung für die Ausführung mit Betätigungsorgan. Die Funkenstrecke 1 des Überspannungsableiters ist mit einem der Funkenstrecke in an sich bekannter Weise zugeordneten spannungsabhängigen Widerstand 2 und der schaltbaren Trennvorrichtung in Serie geschaltet und in einem gemeinsamen ~ehäuse 3 aus Isolierstoff untergebracht. Die schaltbare Trennvorrichtung besitzt einen Kontaktapparat 4 mit Lichtbogenlöschkammer, ein Schaltschloß 5 mit Freiauslösung, ein Betätigungsorgan 6 und einen thermischen und elektromagnetischen Überstromauslöser 7 bzw. 8. Das Gehäuse trägt auch Anschlußklemmen 12 bzw. 13 für einen aktiven Leiter und für die Erdungsleitung.

Figur 4 zeigt eine mögliche räumliche Anordnung von Funkenstrecke 1, spannungsabhängigem Widerstand 2, schaltbarer Trennvorrichtung 4 bis 8 und den Anschlußklemmen 12 bzw. 13 im gemeinsamen Gehäuse 3 aus Isolierstoff. Dabei befinden sich die Funkenstrecke und der spannungsabhängige Widerstand 1, 2 in dem linken Gehäusebereich und die Trennvorrichtung 4...8 im rechten Bereich. Die Breite des linken Gehäusebereiches zur Aufnahme der Funkenstrecke und des Widerstandes ist ein ganzzahliges Vielfaches der Breite des rechten, die Trennvorrichtung aufnehmenden Gehäusebereiches. Das gemeinsame Gehäuse kann dabei einstückig ausgebildet sein oder aus zwei Teilen bestehen, die mittels Befestigungselementen

(Schrauben oder Nieten) miteinander verbunden sind.

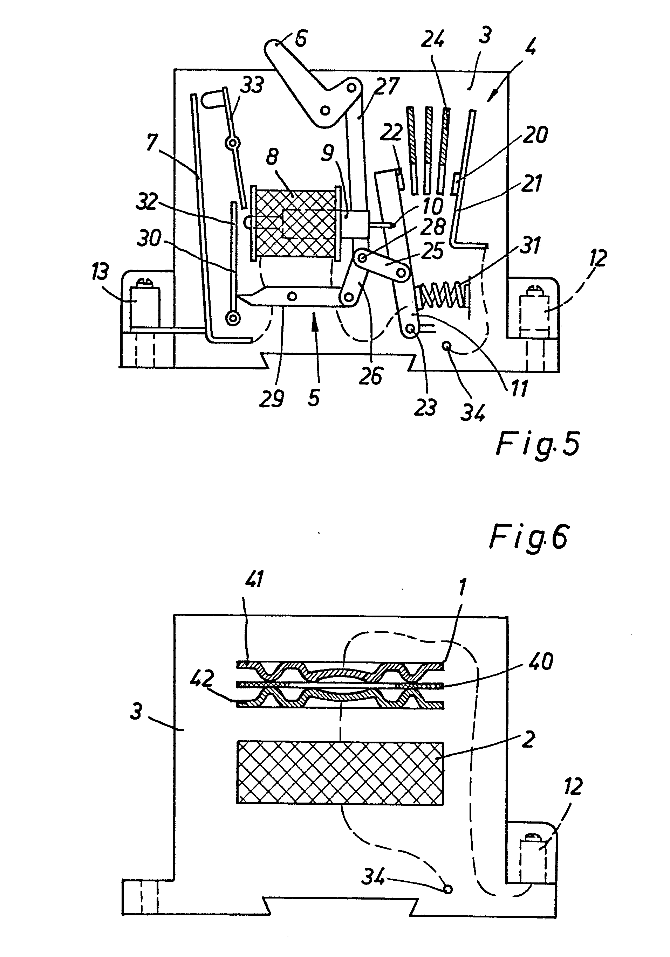

Die Figur 5 zeigt die Trennvorrichtung gem. Schnittlinie A-B der Figur 3. Sie besitzt ein festes Kontaktstück 20, das auf einer Lichtbogenleitschiene 21 befestigt ist und mit einem beweglichen Kontaktstück 22, das auf einem beweglichen Kontakthebel befestigt ist, zusammenwirkt. Der elektromagnetische Auslöser 8 wirkt mit seinem Anker 9 auf den Kontakthebel 11 und reißt diesen auf, wobei die Koppelung zwischen dem Anker 9 und dem Kontakthebel 11 über ein Zuggestänge 10 erfolgt, das auf den Kontakthebel zeitverzögert einwirkt. Der Kontakthebel ist bei 23 drehbar gelagert und im Bereich der Kontaktstelle 20, 22 befindet sich ein Lichtbogenlöschblechpaket 24. Insgesamt ist die Löschkammer mit der Bezugsziffer 4 bezeichnet. Mit dem Kontakthebel 11 ist ferner ein aus einer ersten und einer zweiten Lasche 25, 26 bestehendes Kniegelenkgetriebe verbunden, derart, daß ein Ende der ersten Lasche 25 gelenkig mit dem Kontakthebel und das andere Ende der Lasche 25 zusammen mit dem einen Ende der zweiten Lasche mit einer Zwischenstange 27 über eine Achse 28 gelenkig verbunden sind. Das andere Ende der zweiten Lasche 26 ist mit einem Arm eines Doppelarmhebels 29 gelenkig verbunden; der andere Arm des Doppelarmhebels wird gegen eine Verklinkungsstelle 30 gedrückt, wobei die Verklinkungskraft von einer den Kontakthebel 11 in Ausschaltrichtung beaufschlagenden Feder 31 über die Laschen 25, 26 übertragen wird. Die Verklinkungsstelle 30 befindet sich als Absatz an einem Schwenkhebel 32, der über einen doppelarmigen Zwischenhebel 33 von dem thermi-

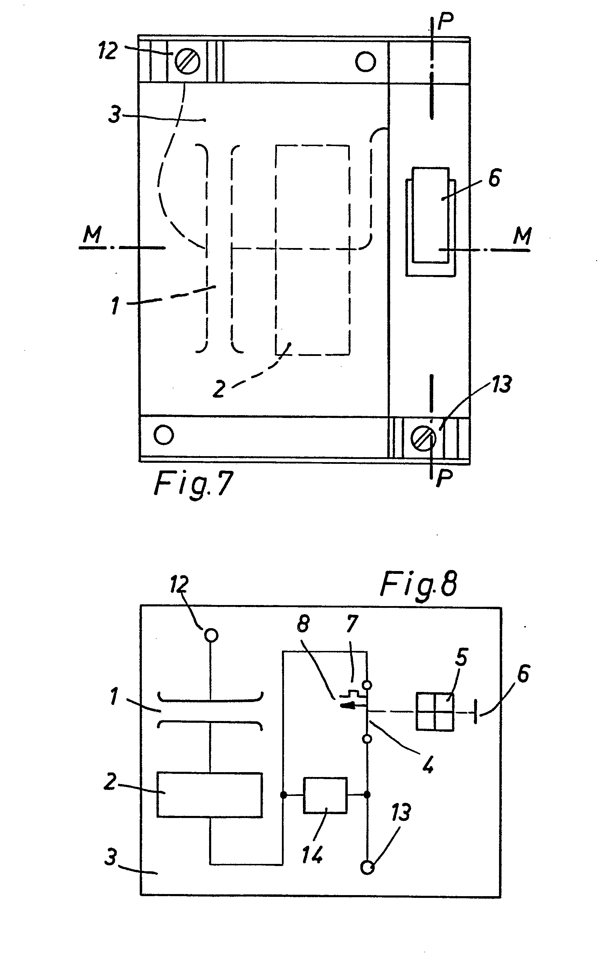

schen Auslöser 7 und/oder dem Anker 9 des elektromagnetischen Auslösers 8 zur Entklinkung der Verklinkungsstelle verschwenkt wird. Der Strom fließt dann von der Klemme 13 über den thermischen Auslöser 7, den elektromagnetischen Auslöser 8 hin zur Kontaktstelle 22/20 und von dort zum Anschluß 24, der eine elektrische Kupplung zum Überspannungsableiter (vgl. Figur 6) bildet.

Der Überspannungsableiter besitzt - wie oben ausgeführt - eine Funkenstrecke 1, die aus zwei in Abstand durch eine isolierende Folie 40 gehaltene Elektroden 41, 42 aufweist, deren Anordnung an sich bekannt ist. Wie aus Figur 7 ersichtlich, sind die Funkenstrecke 1 und der spannungsabhängige Widerstand 2 derart zueinander ausgerichtet, daß ihre beiden Symmetrieachsen M-M miteinander fluchten und senkrecht auf der Ebene P-P stehen, die durch die Bewegung des beweglichen Kontakthebels 11 bestimmt ist.

Die Figur 8 zeigt die Schaltung von optischen und/oder akustischen Signalgebern 14 (die nur sehr schematisch gezeichnet sind) im gemeinsamen Gehäuse 3 aus Isolierstoff. Die Signalgeber dienen dabei zur Anzeige der Beschädigung des Überspannungsableiters. Sie sind parallel zu den Auslösern und der Kontaktstelle geschaltet; dabei könnte eine Schaltung parallel zu der Kontaktstelle allein ebenfalls an sich ausreichen.

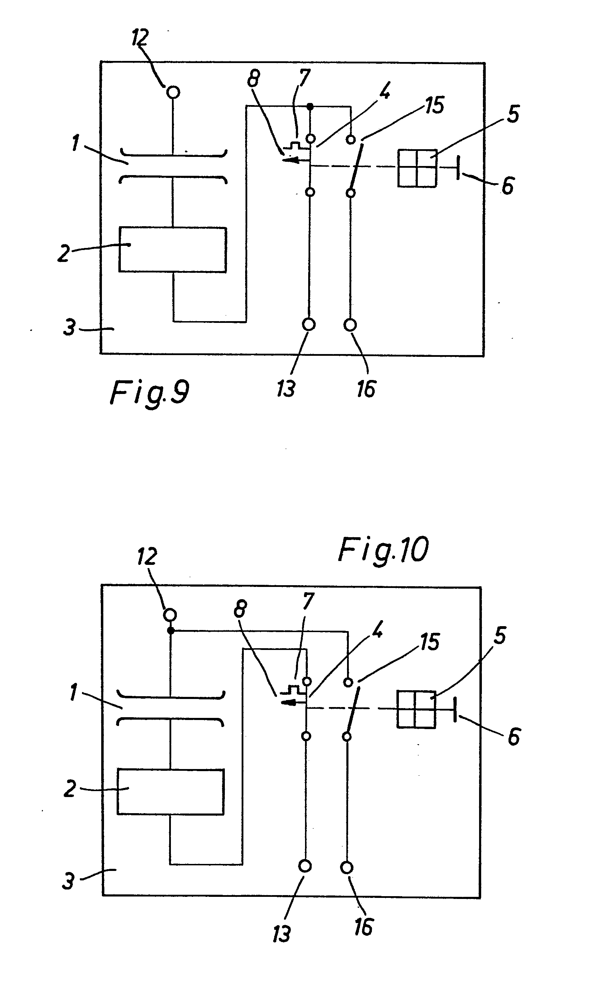

Figur 9 zeigt eine Schaltungsanordnung zur aktustischen und/oder optischen Fernanzeige der Beschädigung des Übespannungsableiters mittels eines Signalkontaktes 15, der mit dem Kontakthebel 11 derart gekoppelt ist, daß sich dieser beim Öffnen des Kontakthebels 11 schließt. Der Signalgeber 15 ist elektrisch parallel zur Kontaktstelle 20/22 und der Klemme 13 geschaltet und endet in einer auf dem gemeinsamen Gehäuse 3 befestigten Klemme 16 für den Anschluß einer Signalleitung. Wenn die Kontaktstelle geöffnet ist, fließt der durch den spannungsabhängigen Widerstand 2 fließende und begrenzte Strom über den geschlossenen Signalkontakt 15 zur Klemme 16.

Die Figur 10 zeigt eine gegenüber Figur 9 modifizierte Schaltungsanordnung zur akustischen und optischen Fernanzeige des Ansprechens der schaltbaren Trennvorrichtung mittels des Signalkontaktas 15, der sich beim Öffnen des Kontakthebels 11 der Trennvorrichtung schließt. Das eine Ende des Signalkontaktes geht, wie bei Figur 9 auf die an dem gemeinsamen Gehäuse 3 befestigte Klemme 16 für den Anschluß der Signalleitung, wogegen das andere Ende zwischen Eingangsklemme 12 und Funkenstrecke 1 geschaltet ist, im Gegensatz zu Anordnung nach Figur 9, bei der das andere Ende zwischen den spannungsabhängigen Widestand 2 und die Kontaktstelle 20/22 geschaltet ist.

0046545

### Ansprüche

1. Elektrische Installationseinrichtung zur Sicherung gegen hohe Überspannungen mit einem eine Funkenstrecke (1) und einen spannungsabhängigen Widerstand (2) oder nur einen spannungsabhängigen Widerstand aufweisenden Überspannungsableiter und einer schaltbaren Trennvorrichtung mit Betätigungsorgan oder optischem Schaltstellungsanzeiger (6), Schaltschloß, Kontaktapparat mit Lichtbogenlöschkammer (4) und Überstromauslösern (7, 8), dadurch gekennzeichnet, daß der Überspannungsableiter zusammen mit den die schaltbare Trennvorrichtung bildenden Bauteilen in einem gemeinsamen Gehäuse (3) aus Isolierstoff angeordnet ist, in dem auch die Anschlußklemmen (12, 13) für den aktiven Leiter bzw. für die Erdung angebracht sind.

2. Einrichtung nach Anspruch 1, dadurch gekennzeichnet, daß die Überstromauslöser (7, 8) in an sich bekannter Weise einen Bimetallauslöser (7) und einem elektromagnetischen Auslöser (8) aufweisen, und daß der bewegliche Kontakthebel (11) des Kontaktapparates (4) der Trennvorrichtung mit dem Anker (9) des elektromagnetischen Auslösers über ein verzögernd kuppelndes Zuggestänge (10) verbunden ist, das im Auslösefall erst dann wirksam wird, nachdem der Anker den für das Lösen der Verklinkung erforderlichen Weg zurückgelegt hat.

3. Einrichtung nach Anspruch 1 oder 2, dadurch gekennzeichnet, daß die Funkenstrecke rotationssymmetrisch aufgebaut ist und zusammen mit dem spannungsabhängigen Widerstand (2) so in dem gemeinsamen Gehäuse (3) neben der Trennvorrichder Ebene steht, die durch die Bewegung des beweglichen Kontakthebels (11) bestimmt ist.

4. Einrichtung nach einem der vorigen Ansprüche, dadurch gekennzeichnet, daß in dem gemeinsamen Gehäuse (3) akustische und/oder optische Signalgeber angeordnet sind, die die Beschädigung des Ableiters anzeigen.

5. Einrichtung nach einem der vorigen Ansprüche, dadurch gekennzeichnet, daß eine zusätzliche Klemme (16) für den Anschluß einer Signalleitung und ein Signalkontakt (15) vorgesehen sind, der sich beim Öffnen des Kontaktes der Trennvorrichtung schießt und so geschaltet ist, daß entweder die Beschädigung des Ableiters oder das Ansprechen der schaltbaren Trennvorrichtung angezeigt wird (Fig. 7 und 8).

Fig.1

Fig.2

Fig. 3

Fig. 4

Fig.5

Fig.6

Fig.7

Fig.8

Fig.9

Fig.10

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 2 010 613 (GENERAL ELEC-TRIC) <br><br> * Seite 1, Zeilen 116-128; Seite 2, Zeilen 1-9 * <br><br> & DE - A - 2 912 189 | 1,2 |
| | DE - C - 975 252 (SIEMENS) <br><br> * Seite 1, Zeilen 18-35; Seite 2, Zeilen 1-32 * | 1,3,4 |
| | ELEKTROTECHNISCHE ZEITSCHRIFT, Ausgabe B, Band 7, Heft 2, 21. Februar 1955, Seite 57 <br> Berlin, DE. <br> "Kathodenfallableiter für Innenräume" <br><br> * Rechte Spalte, Absatz 6 * | 1,3,4 |
| | ELECTRICAL DESIGN NEWS, Band 8, Nr. 5, Mai 1963, Seite 12 <br> Denver, U.S.A. <br> "Circuit breaker combines semiconductor, magnetic protection" <br><br> * Linke Spalte * | 1,2 |
| | FR - A - 812 674 (ALSTHOM) <br><br> * Seite 2, Zeilen 66-105; Seite 3, Zeilen 1-30 * | 1,2 |

**KLASSIFIKATION DER ANMELDUNG (Int Cl³)**

H 01 H 83/10
H 01 T  1/14
H 02 H  9/06

**RECHERCHIERTE SACHGEBIETE (Int. Cl.³)**

H 01 H 83/10
　　　　 9/14
　　　　 83/20
H 02 H  7/24
　　　　 9/06
　　　　 9/04
　　　　 7/00
H 01 T  1/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-12-1981 | LIBBERECHT |

EPA form 1503.1  06.78